# FASCICULE DE BREVET EUROPEEN

(11) **EP 1 747 695 B1**
(45) Date de publication et mention de la délivrance du brevet: **31.10.2007**
(21) Numéro de dépôt: 05733472.4
(22) Date de dépôt: 08.04.2005
(51) Int. Cl.: H04Q 7/34

(54) **PROCEDE DE CONTROLE ET D'ANALYSE DES COMMUNICATIONS DANS UN RESEAU DE TELEPHONIE**
VERFAHREN ZUR STEUERUNG UND ANALYSE VON KUMMUNIKATIONENEN IN EINEM TELEFONNETZ
METHOD OF CONTROLLING AND ANALYSING COMMUNICATIONS IN A TELEPHONE NETWORK

(30) Priorité: 16.04.2004 FR 0404043
(43) Date de publication de la demande: 31.01.2007
(73) Titulaire: THALES, 92200 Neuilly sur Seine (FR)
(72) Inventeur: DELAVEAU, François, THALES, F-94117 CX ARCUEIL (FR); HEURGUIER, Dominique, THALES, F-94117 CX ARCUEIL (FR)
(74) Mandataire: Dudouit, Isabelle
(86) Numéro de dépôt international: PCT/EP2005/051570
(87) Numéro de publication internationale: WO 2005/112497

(56) Documents cités:
- EP-A- 1 051 053
- WO-A-99/12228

## Description

L'invention concerne notamment un procédé et un dispositif pour restituer et interpréter les messages échangés dans le cadre des communications entre un ou plusieurs téléphones mobiles (MS) et des stations de base (BTS) dans un réseau public numérique cellulaire, par exemple.

Elle se situe, par exemple, dans le cadre du relevé de protocole, du contrôle, et de la production du contenu des messages de signalisation et des messages de trafic échangés lors des communications entre des stations de base (BTS) et des terminaux mobiles (MS).

Elle concerne aussi le domaine des procédés de mesure et d'analyse mis en oeuvre dans des équipements d'analyse connus de l'homme de l'art, tels que, par exemple, des mobiles de test (MT) des testeurs de protocoles pour les terminaux mobiles (TPTM), des testeurs de protocoles pour les stations de base (TPBS).

Les solutions actuellement utilisées pour analyser les communications émanant des terminaux mobiles présents dans les réseaux radio cellulaires de deuxième génération et pour produire le contenu des messages sont basées sur l'association d'une station de base virtuelle et d'un mobile de test, servant à la fois de système de mesure pour le relevé de planification du réseau réel et de relais entre la station de base virtuelle et le réseau réel. Le brevet EP 1 051 053 B1 décrit un exemple d'un tel procédé.
Les limites de ces systèmes résident principalement dans les points suivants:
- compte tenu de ses capacités de mesure, le mobile de test MT a fréquemment des difficultés pratiques à obtenir l'intégralité des informations réseau nécessaires au bon fonctionnement de l'ensemble du système, il est obligé pour cela de fonctionner en mode veille et en communication. La portée du système et sa fiabilité globale s'en trouvent fortement réduites.
- compte tenu des capacités du mobile de test MT, il n'est pas possible de contrôler finement la synchronisation des messages émis et reçus par celui-ci dans le mécanisme de relais entre le réseau réel et de la station de base BTS_F, ni les instants d'émissions de BTS_F.
- le mobile de test doit généralement utiliser une carte SIM (Subscriber Identity Module) pour s'inscrire dans le réseau afin de conduire des mesures sur celui-ci, et pour franchir ensuite les étapes protocolaires d'établissement des clés de session avec le réseau réel afin d'assurer vers le réseau réel le relais des messages décodés par BTS_F, le mobile réel MS_R n'est alors plus vu par le réseau.
- les systèmes existants ou leurs variantes qui cherchent à s'affranchir de l'utilisation d'une carte SIM doivent connaître des données propres aux terminaux mobiles réels afin de se substituer à ceux-ci dans le mécanisme d'inscription au réseau.

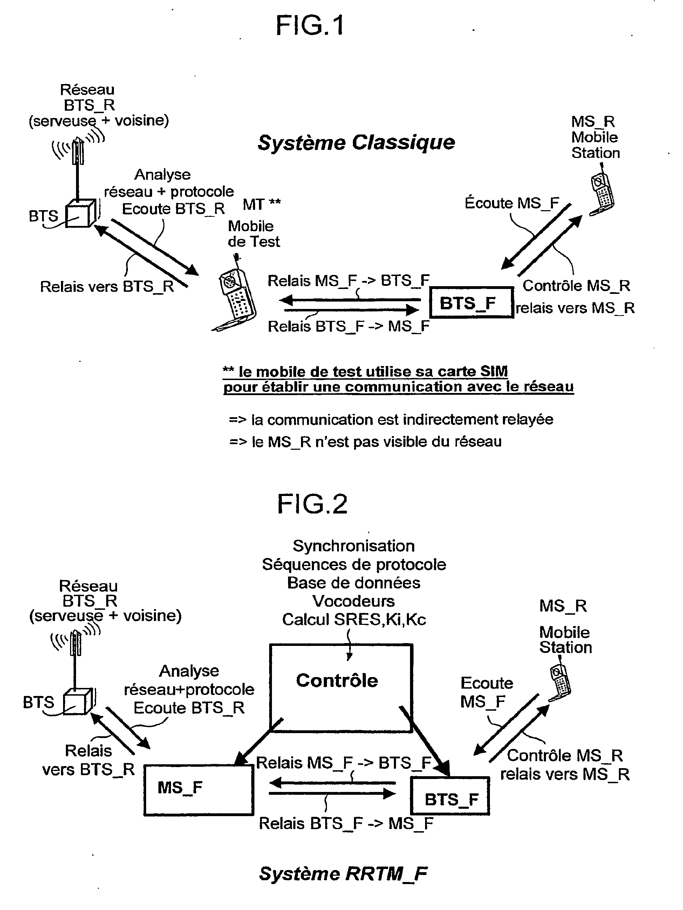

La figure 1 schématise les étapes mises en oeuvre dans un système classique. Le mobile de test utilise sa carte SIM pour établir une communication avec le réseau.

Ces trois faiblesses majeures induisent de nombreuses gênes telles que:
- des anomalies de facturation pour le mobile réel MS_R et pour le réseau réel BTS_R lorsque les données propres à la carte SIM du mobile réel ne sont pas connues (une communication sortante relayée est imputée à l'abonnement associé à la carte SIM du mobile de test).
- une impossibilité pratique de joindre le terminal mobile réel MS_R depuis le réseau (les appels entrants n'aboutissent pas car le relais ne peut être assuré convenablement par le mobile de test MT,
- des anomalies de fonctionnement diverses, par exemple en cas de consultation de sa messagerie par le mobile réel MS_R, en cas de numéros d'appel spécifiques, etc.,
- des limitations de portée et de fiabilité, etc.

L'idée de la présente invention consiste notamment à utiliser de manière simultanée et synchronisée des équipements d'instrumentation performants déjà utilisés pour des applications de mesure ou de contrôle qualité des émetteurs d'infrastructure ou des terminaux radio cellulaires, équipements complétés par des systèmes d'émission, des systèmes de réception et des procédures de mise en oeuvre spécifiques à l'invention.

L'invention concerne un procédé de contrôle et d'analyse des communications radio cellulaires échangées entre des terminaux mobiles et des stations de base BTS caractérisé en ce que l'on insère un réseau de téléphonie mobile fictif RRTM_F comportant une station de base fictive (BTS_F) et un terminal mobile fictif (MS_F) dans le réseau réel de téléphonie mobile RRTM_R, le réseau fictif assurant le décodage et un relais transparent et synchrone des messages échangés entre le réseau réel et le mobile réel, le contrôle d'accès des mobiles réels depuis le réseau réel ou depuis le réseau fictif.

Les messages échangés sont par exemple des messages de signalisation diffusée et dédiée dans les phases d'accès au réseau, ou pour le trafic en situation de communication établie (phonie, données, messages courts, DTMF).

Le procédé peut comporter au moins les étapes suivantes
ole mobile fictif effectue un relevé de planification du réseau, et détermine pour chaque cellule du réseau ses caractéristiques,
o le mobile fictif optimise le choix d'une fréquence et des paramètres temporels en relation avec un signal de balise fictif,
o la station de base fictive émet sur cette fréquence choisie avec les paramètres temporels choisis, le signal de balise fictif qui se superpose temporellement au signal normalement émis par le réseau et est interprété par les mobiles de la station de base réelle comme une émission réelle.

Après le relevé de planification du réseau, le mobile fictif MS_F émet par exemple un signal de brouillage sélectif adapté à interdire l'utilisation de certaines fréquences ou de certains intervalles de temps ou en anglo-saxon slots aux terminaux mobiles présents et favoriser leur accrochage sur la station de base fictive.

Après accrochage du téléphone mobile MS_R sur la station de base virtuelle BTS_F, cette dernière exécute au moins les étapes suivantes :
o décoder, interpréter et relayer de manière transparente et synchrone les messages émis entre la station de base réelle et le mobile réel, et ce quel que soit l'origine de l'appel entrant et sortant,
o authentifier les terminaux mobiles,
o en utilisant le canal d'appel et les canaux dédiés, mettre en oeuvre des procédures adaptées
   o conduisant le mobile à fournir ses paramètres IMSI, IMEI,TMSI, SRES selon des modes et des taux de répétition appropriés,
   o conduisant ensuite le réseau fictif à obtenir par un traitement spécifique à l'invention la clé Ki du mobile MS_R,
   o conduisant le réseau fictif à obtenir après traitement la clé Kc du mobile MS_R pour des sessions ultérieures,
   o conduisant le mobile à inscrire dans sa mémoire ou dans celle de sa carte SIM des paramètres et des applications indiquées par le réseau fictif,
   o conduisant le mobile à émettre les signaux de signalisation, d'accès et de trafic sur les fréquences indiquées par le réseau fictif.

Le procédé est utilisé par exemple dans un réseau public numérique cellulaire de téléphonie mobile.

L'invention concerne aussi un système de contrôle et d'analyse des communications radio cellulaires échangées entre des terminaux mobiles et des stations de base BTS comprenant un réseau de téléphonie mobile fictif RRTM_F comportant une station de base fictive BTS_F et un terminal mobile fictif MS_F, le réseau fictif étant inséré dans le réseau réel RRTM_R caractérisé en ce que le réseau fictif est adapté à assurer le décodage et un relais transparent et synchrone des messages échangés entre le réseau réel et le mobile réel, le contrôle d'accès des mobiles réels depuis le réseau réel ou depuis le réseau fictif.

L'invention présente notamment les avantages suivants :
- elle met en oeuvre une gestion fine de l'interaction et de la synchronisation entre les composants mobile fictif MS_F et les stations de base fictives BTS_F dans les phases de relais transparent des messages du réseau réel au mobile réel, ainsi qu'une gestion fine de la synchronisation du réseau fictif RRTM_F sur le réseau réel RRTM_R.
- elle permet de synchroniser finement le signal d'émission BCCH_F sur le signal émis par la station de base réelle BTS_R, ce qui limite les effets de gêne et d'indiscrétion dans le réseau réel.
- elle permet de s'affranchir de l'inscription propre des composants du réseau fictif dans le réseau réel, c'est-à-dire l'affranchissement de l'utilisation d'une carte SIM ou de la connaissance des données propres aux terminaux mobiles réels,
- l'utilisation d'un tel procédé augmente à la fois la portée, la fiabilité et la complétude des actions sur les terminaux mobiles réels MS_R présents dans l'environnement.
- elle est optimale en portée et sensibilité. Elle utilise par exemple, pour la réception, des traitements basés sur les recommandations des normes (démodulation avec égalisation, en termes anglo-saxons « data aided » sur middamble », décodage, etc.). La configuration matérielle et les traitements sont donc optimaux, alors que ceux des systèmes classiques sont généralement très inférieurs, notamment la partie démodulation/égalisation.
- elle peut être couplée à des techniques utilisées dans le traitement d'antennes, le filtrage adaptatif et dans les traitements de réception des signaux, égalisation, par exemple décrits dans les brevets du demandeur FR 2 766 320 et FR 2 829 241 ou encore des techniques de brouillage.

D'autres caractéristiques et avantages de la présente invention apparaîtront mieux à la lecture de la description, donnée à titre illustratif et nullement limitatif, annexée des figures qui représentent :
o La figure 1 un système classique de communications
o La figure 2 un exemple d'architecture d'un système selon l'invention.

Afin de mieux faire comprendre le principe de l'invention, l'exemple qui suit est donné à titre illustratif et nullement limitatif pour un système de communication entre un ou plusieurs téléphones mobiles (MS) et des stations de base BTS dans un réseau public numérique cellulaire de téléphonie mobile.

La figure 2 représente un exemple d'architecture comprenant un réseau réel BTS_R, un téléphone mobile MS_R, un réseau de téléphonie mobile fictif RRTM_F constitué par exemple d'une station de base fictive BTS_F et d'un mobile fictif MS_F. Ce réseau fictif de téléphonie est pourvu de matériels et de procédures spécifiques à la mise en oeuvre du procédé selon l'invention. Il est immergé dans le réseau réel RRTM_R et les terminaux mobiles MS_R contenus dans les cellules de ce réseau. Il comporte aussi un dispositif de contrôle dont les fonctions sont détaillées ci-après.
Le Mobile fictif MS_F, a notamment pour fonction
- de scanner les fréquences,
- de décoder et d'interpréter la signalisation des différentes cellules du réseau,
- de relever la planification des cellules.

Il détermine notamment pour chaque cellule environnante une ou plusieurs caractéristiques de la cellule, par exemple :
- Le niveau et le rapport C/(I+N) reçus,
- Les codes couleurs BSIC (, code identité de la station de base ou en anglo-saxon Base Station Identity Code), les codes LAC (code d'authentification de licence ou en anglo-saxon Localisation Area Code), et les codes MCC/MNC (code du pays ou Mobile Country Code and Mobile Network) de la cellule,
- Le plan des fréquences attribuées à la cellule ou CA list de la cellule (en anglo-saxon Cell Allocation list),
- La liste des fréquences voisines des cellules voisines de la cellule, désignée par l'expression « BA list »,
- Les critères de re-sélection de la cellule (désignées C1, C2, etc.)

Pour une cellule réelle environnante BTS_R et en fonction des caractéristiques relevées concernant les différentes cellules environnantes, le mobile fictif MS_F optimise les paramètres temporels associés, par exemple :
- le choix d'une fréquence Fsel appartenant à la BA list de la station de base sélectionnée BTS_R,
- le choix de l'instant d'émission et des caractéristiques temporelles et de synchronisation d'un signal de balise fictif BCCH_F,
- le choix des fréquences à brouiller pour optimiser le bilan de liaison.

### Station de base fictive

La station de base fictive BTS_F émet, sur la fréquence sélectionnée Fsel et avec les caractéristiques temporelles choisies et contrôlées, un signal de balise fictif BCCH_F qui :
- se superpose fréquentiellement et temporellement au signal normalement émis par le réseau,
- est interprété par les mobiles réels MS_R de la cellule réelle BTS_R comme une émission réelle du réseau.

Ce signal de balise fictif contient différentes données de signalisation destinées selon les actions recherchées à :
- forcer une procédure de relocalisation sur la station de base fictive BTS_F, le téléphone mobile réel MS_R étant ainsi conduit à transmettre ses paramètres (TMSI identité temporaire du mobile temporary Mobile Subscriber Identity, IMSI International Mobile Subscriber Identity, IMEI International Mobile Equipment Identity) dans ses échanges avec celle-ci,
- interdire l'accès au réseau,
- bloquer les terminaux de la cellule réelle BTS_R sur la cellule fictive BTS_F,
- rejeter les terminaux mobiles initialement bloqués vers le réseau réel.

L'organe de contrôle (couvrant les couches 1, 2, 3 de l'interface air) est adapté notamment:
- à analyser finement l'environnement réseau réel RRTM_R, à détecter les cellules présentes dans cet environnement et la liste de leurs cellules voisines, à relever les critères de re-sélection des différentes cellules et ce, de manière entièrement passive,
- à décoder et interpréter les messages de signalisation ou de trafic provenant du réseau réel RRTM_R,
- à relayer de manière synchrone ces messages vers les terminaux mobiles avec ou sans modification,
- à décoder et interpréter les messages de signalisation ou de trafic provenant du mobile MS_R, soit de sa propre initiative, soit à l'issue d'une procédure initiée par le réseau réel, soit en cas de procédure forcée par le réseau fictif,
- à relayer de manière synchrone ces messages vers le réseau réel RRTM_R avec ou sans modification,
- pour une cellule choisie BTS_R du réseau réel RRTM_R, à émettre un signal de balise fictif BCCH_F dont les caractéristiques (fréquence, instant de début d'émission, synchronisation, contenu des messages de signalisation, niveau, etc.), sont déterminées afin qu'un terminal mobile MS_R dans la cellule choisie BTS_R soit amené à s'accrocher sur la balise BCCH_F, devenant ainsi contrôlé par la station de base BTS_F du réseau fictif RRTM_F,
- à gérer, une fois le signal balise BCCH_F émis ou, préalablement à l'émission de ce signal ou encore simultanément à cette émission, un signal de brouillage sélectif, permettant d'interdire au mobile réel MS_R de la cellule BTS-R choisie, toute connexion sur les autres cellules du réseau réel qui pourraient lui être accessibles, afin de favoriser l'accrochage de MS_R sur la BTS_F du réseau fictif,
- à gérer, une fois le mobile MS_R accroché sur BTS_F, l'intégralité des états et des procédures réseau prévues par la norme et dans lesquels le mobile réel MS_R et la station de base réelle BTS_R sont amenés à se trouver,
- à forcer toute procédure prévue par la norme pour la gestion de mobilité ou l'appel des mobiles telles que la recherche de personne ou paging, la relocalisation, le transfert cellulaire ou handover, l'authentification, l'identification, l'établissement d'une session particulière, la prise d'appel entrant ou sortant, etc.
- à télécharger vers le mobile réel MS_R des données ou des applicatifs au moyen des procédures autorisées par la norme, par exemple des fonctions RAM «Remote Applet Management» ou RFM «Remote File Management» qui permettent respectivement le téléchargement d'applications «SIM Application Toolkits» ou de données multimédia dans la carte SIM ou le terminal, etc.
- à produire des informations spécifiques à partir des données décodées lors des phases précédentes,
- à produire des informations spécifiques au mobile réel MS_R, à partir des données décodées lors des phases précédentes.

Le procédé met par exemple en oeuvre les étapes ou phases décrites ci-après.

### Phase préalable

Le mobile fictif MS_F effectue un relevé de planification du réseau.

### Phase d'accrochage d'un ou de plusieurs téléphones mobiles

Le réseau fictif émet ensuite un signal de brouillage sélectif afin :
- d'interdire l'utilisation de certaines fréquences Fₙₒₙₐᵤₜ ou de certains slots aux terminaux mobiles présents dans le réseau réel RRTM_R,
- de favoriser l'accrochage des terminaux mobiles sur la station de base fictive BTS_F.
Ceci permet notamment de traiter plusieurs cellules environnantes (BTS_R1, BTS_R2, ..., BTS_RN) par un choix judicieux de la fréquence, de l'instant d'émission et des caractéristiques temporelles et de synchronisation du signal BCCH_F et du signal de brouillage sélectif.

### Phase après accrochage sur un téléphone mobile

Après l'accrochage du téléphone mobile réel MS_R sur la station de base virtuelle BTS_F, cette dernière :
- assure le décodage, l'interprétation et le relais transparent et synchrone des messages émis par la station de base réelle BTS_R à destination du mobile réel MS_R,
- assure le décodage, l'interprétation et le relais transparent et synchrone des messages émis par le mobile réel MS_R à destination de la station de base réelle BTS_R,
- puis la station de base virtuelle conduit diverses procédures et traitements spécifiques à l'invention mettant en oeuvre, depuis le réseau fictif RRTM_F, des procédures partielles ou intégrales normales au fonctionnement du réseau telles que :
   o l'authentification, l'identification et/ou l'inscription des terminaux,
   o le téléchargement de fonction ou de paramètres dans les terminaux,
   o l'appel des terminaux, etc.
en utilisant le canal d'appel (PCH) et les canaux dédiés (DCCH), la station de base virtuelle exécute différentes procédures connues de l'Homme du métier:
o conduisant le mobile réel à lui transmettre ses paramètres IMSI, IMEI, TMSI, SRES selon des modes et des taux de répétition appropriés,
o conduisant ensuite le réseau fictif à obtenir, après traitement spécifique à l'invention, la clé Ki d'authentification du mobile MS_R,
o conduisant le réseau fictif à obtenir après traitement approprié, la clé Kc créée par le système du mobile réel MS_R pour des sessions utltérieures,
o conduisant le mobile réel à inscrire dans sa mémoire ou dans celle de sa carte SIM, des paramètres et des applications indiquées par le réseau fictif, etc.

En relayant les messages des mobiles vers le réseau et du réseau vers les mobiles, le réseau fictif en décode le contenu.

Le procédé peut ensuite comporter les étapes suivantes :
Après accrochage et exécution des étapes précitées, le réseau fictif BTS_F rejette le mobile réel MS_R, par exemple,
   - Par forçage d'une procédure de transfert cellulaire ou Handover ou de relocalisation sur une cellule réelle du réseau autre que BTS_R,
   - Ou par dégradation volontaire de la communication conduisant à son interruption
   - Ou par interception forcée du protocole.
Décodage et interprétation des messages de signalisation dédiée et des messages de trafic sortants ou entrants du téléphone mobile réel MS_R.
Pour décoder et interpréter les messages de signalisation dédiée et les messages de trafic sortants ou entrants du téléphone mobile réel MS_R, le mobile fictif MS_F et la cellule fictive BTS_F sont agencés de manière synchrone de sorte que le mobile réel MS_R s'enregistre sur la cellule fictive BTS_F et,
o que lors d'un appel sortant du téléphone mobile MS_R sur un réseau acceptant les transactions A5/0, appel arrivant sur la station de base fictive BTS_F, les messages du protocole soient décodés et interprétés par BTS_F, et transmis au mobile fictif MS_F qui les relaie avec des modifications légères vers le réseau réel, décode et interprète en retour les réponses du réseau réel, les relaie vers la cellule fictive BTS_F qui les relaie au mobile réel ; que pour cela, le mobile fictif MS_F n'ait pas besoin d'établir de communication propre avec le réseau réel ni de disposer de carte SIM
o que lors d'un appel entrant du téléphone mobile MS_R sur un réseau acceptant les transactions A5/0, appel arrivant sur le mobile fictif MS_F, les messages d'appel soient décodés et interprétés par MS_F, et transmis à la BTS fictive BTS_F qui les relaie avec des modifications légères vers le mobile réel MS_R, décode et interprète en retour les réponses du mobile réel, les relaie vers le mobile fictif MS_F qui les relaie avec des modifications légères vers le réseau réel; que pour cela, le mobile fictif MS_F n'ait pas besoin d'établir de communication propre avec le réseau réel ni de disposer de carte SIM
o que lors d'un appel sortant du téléphone mobile MS_R, de clé Ki connue ou préalablement obtenue par mise en oeuvre de l'invention, sur un réseau n'acceptant pas les transactions A5/0, appel arrivant sur la station de base fictive BTS_F, les messages du protocole soient décodés et interprétés par BTS_F, et transmis au mobile fictif MS_F qui les relaie vers le réseau réel BTS_R en calculant pour cela la clé de session Kc, décode et interprète en retour les réponses du réseau réel, les relaie vers la cellule fictive BTS_F qui les relaie au mobile réel MS_R en utilisant la clé de session calculée; que pour cela, le mobile fictif MS_F n'ait pas besoin d'établir de communication propre avec le réseau réel ni de disposer de carte SIM
o que lors d'un appel entrant du téléphone mobile MS_R, de clé Ki connue ou préalablement obtenue par mise en oeuvre de l'invention, sur un réseau n'acceptant pas les transactions A5/0, appel arrivant sur le mobile fictif MS_F, les messages d'appel soient décodés et interprétés par MS_F, et transmis à la station de base fictive BTS_F qui les relaie vers le mobile réel MS_R, en calculant pour cela la clé de session Kc, puis décode et interprète en retour les réponses de MS_R, les relaie vers le mobile fictif MS_F qui les relaie vers le réseau réel en utilisant la clé de session calculée ; que pour cela, le mobile fictif MS_F n'ait pas besoin d'établir de communication propre avec le réseau réel ni de disposer de carte SIM
o que lors d'un appel sortant du téléphone mobile MS_R, de clé Ki inconnue, sur un réseau n'acceptant pas les transactions A5/0, appel arrivant sur la station de base fictive BTS_F,
   ■ jusqu'à établissement des clés de session, les messages du protocole soient décodés et interprétés par BTS_F, et transmis au mobile fictif MS_F qui les relaie vers le réseau réel BTS_R, décode et interprète en retour les réponses du réseau réel, les relaie vers la cellule fictive BTS_F qui les relaie au mobile réel MS_R; que pour cela, le mobile fictif MS_F n'ait pas besoin d'établir de communication propre avec le réseau réel ni de disposer de carte SIM.
   ■ pour l'établissement des clés de session entre le réseau fictif et le mobile réel MS_R, la BTS fictive BTS_F indique au mobile le mode de communication A5/0,
   ■ pour la poursuite du relais entre le réseau fictif et le réseau réel BTS_R, le mobile fictif MS_F établisse une communication normale avec le réseau réel et de manière synchronisée avec l'établissement du lien entre BTS_F et MS _R et utilise pour cela une carte SIM
o que lors d'un appel entant à destination du téléphone mobile à MS_R, de clé Ki inconnue, sur un réseau n'acceptant pas les transactions A5/0, appel arrivant sur le mobile fictif MS_F,
   ■ jusqu'à établissement des clés de session, les messages du protocole soient décodés et interprétés par MS_F, et transmis à la BTS fictive BTS_F qui les relaie vers le mobile réel MS_R, décode et interprète en retour les réponses du mobile réel MS_R, les relaie vers le mobile fictif MS_F qui les relaie au réseau réel BTS_R; que pour cela, le mobile fictif MS_F n'ait pas besoin d'établir de communication propre avec le réseau réel ni de disposer de carte SIM.
   ■ pour l'établissement des clés de session entre le réseau fictif et le mobile réel MS_R, la BTS fictive BTS_F indique au mobile le mode de communication A5/0,
   ■ pour la poursuite du relais entre le réseau fictif et le réseau réel BTS_R, le mobile fictif MS_F établisse une communication normale avec le réseau réel et de manière synchronisée avec l'établissement du lien entre BTS_F et MS_R et utilise pour cela une carte SIM
o que lors d'un appel sortant du téléphone mobile MS_R de clé Ki inconnue sur un réseau acceptant les transactions A5/2, appel arrivant sur la station de base fictive BTS_F, les premiers messages émis par MS_R dans le protocole d'accès au réseau soient décodés et interprétés par BTS_F, et transmis au mobile fictif MS_F qui les relaie avec des modifications légères vers BTS_R, les premiers messages émis par BTS_R dans le protocole d'accès au réseau soient décodés et interprétés par MS_F, et transmis à BTS_F qui les relaie avec des modifications légères vers MS_R. BTS_F établit une session A5/2 avec MS_R et MS_F établit avec BTS_R une session A5/2, puis l'organe de contrôle du réseau fictif met en oeuvre tout procédé existant permettant d'obtenir en un temps suffisamment court la clé de session Kc. BTS_F décode et interprète les messages de MS_R, les relaie vers MS_F qui les relaie vers BTS_R. MS_F décode et interprète les messages de BTS_R, les relaie vers BTS_F qui les relaie vers MS_R. Pour cela, le mobile fictif MS_F n'a pas besoin d'établir de communication propre avec le réseau réel ni de disposer de carte SIM
o que lors d'un appel entrant du téléphone vers le mobile MS_R de clé Ki inconnue sur un réseau acceptant les transactions A5/2, appel arrivant sur le mobile fictif MS_F, les premiers messages émis par BTS_R dans le protocole d'accès au réseau soient décodés et interprétés par MS_F, et transmis à BTS_F qui les relaie avec des modifications légères vers MS_R, les premiers messages émis par MS_R dans le protocole d'accès au réseau soient décodés et interprétés par BTS_F, et transmis à MS_F qui les relaie avec des modifications légères vers BTS_R. MS_F établit avec BTS_R une session A5/2, tandis que BTS_F établit une session A5/2 avec MS_R, puis l'organe de contrôle du réseau fictif met en oeuvre tout procédé existant permettant d'obtenir en un temps suffisamment court la clé de session Kc. MS_F décode et interprète ensuite les messages de BTS_R, les relaie vers BTS_F qui les relaie vers MS_R ; BTS_F décode et interprète les messages de MS_R, les relaie vers MS_F qui les relaie vers BTS_R. Pour cela, le mobile fictif MS_F n'a pas besoin d'établir de communication propre avec le réseau réel ni de disposer de carte SIM
o que lors d'un appel sortant du téléphone mobile MS_R de clé Ki inconnue sur un réseau n'acceptant que les transactions A5/1, appel arrivant sur la station de base fictive BTS_F, les premiers messages émis par MS_R dans le protocole d'accès au réseau soient décodés et interprétés par BTS_F, et transmis au mobile fictif MS_F qui les relaie avec des modifications légères vers BTS_R, les premiers messages émis par BTS_R dans le protocole d'accès au réseau soient décodés et interprétés par MS_F, et transmis à BTS_F qui les relaie avec des modifications légères vers MS_R. BTS_F établit une première session A5/2 avec MS_R, puis l'organe de contrôle du réseau fictif met en oeuvre tout procédé existant permettant d'obtenir en un temps suffisamment court la clé de session Kc. Une fois obtenue la clé Kc, BTS_F établit une nouvelle session A5/1 tandis que MS_F établit avec BTS_R une session A5/1. MS_F décode et interprète ensuite les messages de BTS_R, les relaie vers BTS_F qui les relaie vers MS_R ; BTS_F décode et interprète les messages de MS_R, les relaie vers MS_F qui les relaie vers BTS_R. Pour cela, le mobile fictif MS_F n'a pas besoin d'établir de communication propre avec le réseau réel ni de disposer de carte SIM
o que lors d'un appel entrant du téléphone vers le mobile MS_R de clé Ki inconnue sur un réseau n'acceptant que les transactions A5/1, appel arrivant sur le mobile fictif MS_F, les premiers messages émis par BTS_R dans le protocole d'accès au réseau soient décodés et interprétés par MS_F, et transmis à BTS_F qui les relaie avec des modifications légères vers MS_R, les premiers messages émis par MS_R dans le protocole d'accès au réseau soient décodés et interprétés par BTS_F, et transmis à MS_F, qui les relaie avec des modifications légères vers BTS_R. BTS_F établit une première session A5/2 avec MS_R, puis l'organe de contrôle du réseau fictif met en oeuvre tout procédé existant permettant d'obtenir en un temps suffisamment court la clé de session Kc. Une fois obtenue la clé Kc, BTS_F établit une nouvelle session A5/1 tandis que MS_F établit avec BTS_R une session A5/1. BTS_F décode et interprète les messages de MS_R, les relaie vers MS_F qui les relaie vers BTS_R ; MS_F décode et interprète ensuite les messages de BTS_R, les relaie vers BTS_F qui les relaie vers MS_R. Pour cela, le mobile fictif MS_F n'a pas besoin d'établir de communication propre avec le réseau réel ni de disposer de carte SIM.

Utilisation d'antennes et de traitements spécifiques pour réaliser les actions précédentes, et notamment
- pour recevoir, démoduler et décoder les signaux,
- enregistrer le contenu des messages,
- déterminer la direction d'arrivée et la distance de BTS_R et de MS_R puis leur localisation,
le mobile fictif MS_F et la station de base fictive BTS_F du réseau fictif RRTM_F utilisent par exemple des antennes spécifiques et des traitements d'antenne adaptatifs, pour l'émission et pour la réception, ainsi que pour la démodulation.

Les traitements sont par exemple :
o spécifiquement dédiés à l'amélioration des performances,
o ayant fait l'objet des procédés déposés sous les références FR 2 766 320, FR 99 16775, FR 2 829 241, FR 01 /12976
o conduisant le réseau fictif à opérer sur des cellules éloignées de l'endroit où il se trouve assigné,
o permettant au réseau fictif de déterminer la direction d'arrivée et de localiser les composantes BTS_R et MS_R.

A titre d'exemples non limitatifs, l'invention permet de réaliser les procédures et de produire les informations suivantes sur un terminal mobile MS_R (la liste ci dessous n'étant pas limitative)
- rejet du mobile MS_R vers le réseau,
- interdiction d'accès du mobile à une cellule, au réseau, etc.
- paramètres d'identification du terminal mobile MS_R (IMSI, IMEI, TMSI courant),
- paramètres d'authentification du terminal mobile MS_R (SRES)
- informations relatives à la clé Ki du terminal mobile MS_R, et à la clé Kc pour les sessions ultérieures
- re-localisation du mobile MS_R avec interruption possible à chaque phase du protocole,
- appel du mobile MS_R avec interruption possible à chaque phase du protocole,
- assignement au mobile MS_R de paramètres inscrits dans la mémoire de la carte SIM
- téléchargement d'applicatifs dans le mobile MS_R
- téléchargement de paramètres inscrits dans la mémoire de la carte SIM présente dans le mobile MS_R ou dans la mémoire du mobile MS_R
- relais des tentatives d'appel de MS_R à BTS_R (appel sortant) jusqu'à établissement de la communication, forçage de procédures spécifiques signalant à l'abonné un appelé occupé, une messagerie ou un réseau non disponible, etc.
- relais des tentatives d'appel de BTS_R à MS_R (appel entrant), jusqu'à établissement de la communication,
- contenu des communications entrant ou sortant du terminal mobile MS_R (phonie, datas, SMS, DTMF, etc.), etc.

Le procédé selon l'invention conduit notamment à des améliorations dont certaines sont données à titre illustratif, par exemple,
- s'affranchir de l'inscription propre des composants du réseau fictif dans le réseau réel, c'est-à-dire, s'affranchir de l'utilisation d'une carte SIM (en anglo-saxon Subscriber Identity Module) ou de la connaissance des données propres aux terminaux mobiles réels,
- le contrôle de terminaux dans des cellules éloignées et pour chaque terminal contrôlé,
- la détection et l'interprétation des appels du réseau aux terminaux,
- le relais des communications entrantes,
- le décodage et l'interprétation des différents messages de signalisation et de trafic relatif aux communications entrantes,
- Le téléchargement de données ou d'applicatifs dans les terminaux,

## Revendications

1. - Procédé de contrôle et d'analyse des communications radio cellulaires échangées entre des terminaux mobiles et des stations de base (BTS) avec un réseau de téléphonie mobile fictif (RRTM_F) comportant une station de base fictive (BTS_F) et un terminal mobile fictif (MS_F) inséré dans le réseau réel (RRTM_R), **caractérisé en ce que** le réseau fictif assure le décodage et un relais transparent et synchrone des messages échangés entre le réseau réel et le mobile réel, le contrôle d'accès des mobiles réels depuis le réseau réel ou depuis le réseau fictif.

2. - Procédé selon la revendication 1 **caractérisé en ce que** les messages échangés sont des messages de signalisation diffusée et dédiée dans les phases d'accès au réseau, ou pour le trafic en situation de communication établie.

3. - Procédé selon la revendication 1 **caractérisé en ce qu'**il comporte au moins les étapes suivantes :
o le mobile fictif effectue un relevé de planification du réseau, et détermine pour chaque cellule ses caractéristiques,
o le mobile fictif optimise le choix d'une fréquence et des paramètres temporels en relation avec un signal de balise fictif,
o la station de base fictive émet sur cette fréquence choisie avec les paramètres temporels choisis le signal de balise fictif qui se superpose temporellement au signal normalement émis par le réseau et est interprété par les mobiles de la station de base réelle comme une émission réelle.

4. - Procédé selon la revendication 3 **caractérisé en ce qu'**après le relevé de planification du réseau le mobile fictif (MS_F) émet un signal de brouillage sélectif adapté à interdire l'utilisation de certaines fréquences ou de certains intervalles de temps ou slots aux terminaux mobiles présents et favoriser leur accrochage sur la station de base fictive.

5. - Procédé selon la revendication 4 **caractérisé en ce qu'**après accrochage du téléphone mobile (MS_R) sur la station de base virtuelle (BTS_F), cette dernière exécute au moins les étapes suivantes :
o décoder, interpréter et relayer de manière transparente et synchrone les messages émis entre la station de base réelle et le mobile réel,
et :
o authentifier les terminaux mobiles,
o en utilisant le canal d'appel et les canaux dédiés, mettre en oeuvre des procédures adaptées
o conduisant le mobile à fournir ses paramètres IMSI, IMEI, TMSI, SRES selon des modes et des taux de répétition appropriés,
o conduisant ensuite le réseau fictif à obtenir par un traitement spécifique à l'invention la clé Ki du mobile (MS_R),
o conduisant le réseau fictif à obtenir après traitement la clé Kc du mobile (MS_R) pour des sessions ultérieures,
o conduisant le mobile à inscrire dans sa mémoire ou dans celle de sa carte SIM des paramètres et des applications indiquées par le réseau fictif,
o conduisant le mobile à émettre les signaux de signalisation, d'accès et de trafic sur les fréquences indiquées par le réseau fictif.

6. - Procédé selon la revendication 5 **caractérisé en ce que** le réseau fictif rejette le mobile réel (MS_R) par forçage d'une procédure de transfert cellulaire ou handover ou de re-localisation sur une cellule réelle du réseau autre que la station de base réelle (BTS_R), ou par dégradation volontaire de la communication conduisant à son interruption ou par interception forcée du protocole.

7. - Procédé selon l'une des revendications 1 à 6 **caractérisé en ce que** l'on utilise un réseau public numérique cellulaire de téléphonie mobile.

8. - Système de contrôle et d'analyse des communications radio cellulaires échangées entre des téléphones mobiles et des stations de base (BTS) comprenant un réseau de téléphonie mobile fictif (RRTM_F) comportant une station de base fictive (BTS_F) et un terminal mobile fictif (MS_F), le réseau fictif étant inséré dans le réseau réel (RRTM_R) **caractérisé en ce que** le réseau fictif est adapté à assurer le décodage et un relais transparent et synchrone des messages échangés entre le réseau réel et le mobile réel, le contrôle d'accès des mobiles réels depuis le réseau réel ou depuis le réseau fictif.

## Claims

1. Method of controlling and analysing cellular radio communications exchanged between mobile terminals and base stations (BTS) with a dummy mobile telephone network (RRTM_F) comprising a dummy base station (BTS_F) and a dummy mobile terminal (MS_F) inserted into the real network (RRTM_R), **characterized in that** the dummy network ensures the decoding and a transparent and synchronous relaying of the messages exchanged between the real network and the real mobile, and the control of access of the real mobiles from the real network or from the dummy network.

2. Method according to Claim 1, **characterized in that** the messages exchanged are messages of broadcast and dedicated signalling in the network access phases, or for the traffic in a situation of communication established.

3. Method according to Claim 1, **characterized in that** it comprises at least the following steps:
o the dummy mobile performs a planning log of the network, and determines for each cell its characteristics,
o the dummy mobile optimizes the choice of a frequency and of the time parameters in conjunction with a dummy beacon signal,
o the dummy base station transmits on this chosen frequency with the chosen time parameters the dummy beacon signal which is superimposed temporally with the signal normally transmitted by the network and is interpreted by the mobiles of the real base station as a real transmission.

4. Method according to Claim 3, **characterized in that** after the planning log of the network the dummy mobile (MS_F) transmits a selective jamming signal suitable for prohibiting the use of certain frequencies or of certain time intervals or slots by the mobile terminals present and for favouring their going on-hook to the dummy base station.

5. Method according to Claim 4, **characterized in that** after the mobile telephone (MS_R) has gone on-hook to the virtual base station (BTS_F), the latter executes at least the following steps:
o decoding, interpreting and relaying in a transparent and synchronous manner the messages transmitted between the real base station and the real mobile, and:
o authenticating the mobile terminals,
o by using the call channel and the dedicated channels, implementing suitable procedures,
o leading the mobile to provide its parameters IMSI, IMEI, TMSI, SRES according to appropriate modes and rates of repetition,
o subsequently leading the dummy network to obtain by a processing specific to the invention the key Ki of the mobile (MS_R),
o leading the dummy network to obtain, after processing, the key Kc of the mobile (MS_R) for later sessions,
o leading the mobile to register in its memory or in that of its SIM card, parameters and applications indicated by the dummy network,
O leading the mobile to transmit the signalling, access and traffic signals on the frequencies indicated by the dummy network.

6. Method according to Claim 5, **characterized in that** the dummy network rejects the real mobile (MS R) by forcing a procedure for cell transfer or handover or for relocation onto a real cell of the network other than the real base station (BTS_R), or by intentional degradation of the communication leading to its interruption or by forced interception of the protocol.

7. Method according to one of Claims 1 to 6, **characterized in that** a mobile telephone cellular digital public network is used.

8. System for controlling and analysing cellular radio communications exchanged between mobile telephones and base stations (BTS) comprising a dummy mobile telephone network (RRTM_F) comprising a dummy base station (BTS F) and a dummy mobile terminal (MS_F), the dummy network being inserted into the real network (RRTM R), **characterized in that** the dummy network is suitable for ensuring the decoding and a transparent and synchronous relaying of the messages exchanged between the real network and the real mobile, and the control of access of the real mobiles from the real network or from the dummy network.

## Patentansprüche

1. Verfahren zur Steuerung und Analyse der Funkkommunikationen, die zwischen mobilen Terminals und Basisstationen (BTS) mit einem fiktiven Mobiltelefonnetz (RRTM_F), umfassend eine fiktive Basisstation (BTS_F) und ein fiktives mobiles Terminal (MS_F), das in das reale Netz (RRTM_R) eingesetzt ist, **dadurch gekennzeichnet, dass** das fiktive Netz die Decodierung und ein transparentes und synchrones Netz der zwischen dem realen Netz und dem realen Mobiltelefon ausgetauschten Meldungen, die Zugriffskontrolle der realen Mobiltelefone vom realen Netz oder vom fiktiven Netz gewährleistet.

2. Verfahren nach Anspruch 1, **dadurch gekennzeichnet, dass** die ausgetauschten Meldungen verbreitete Anzeigemeldungen sind, die für die Zugriffsphasen auf das Netz oder für den Verkehr in einer Situation einer hergestellten Verbindung bestimmt sind.

3. Verfahren nach Anspruch 1, **dadurch gekennzeichnet, dass** es mindestens die folgenden Schritte umfasst:
• das fiktive Mobiltelefon führt eine Planungsaufstellung des Netzes durch und bestimmt für jede Zelle ihre Eigenschaften;
• das fiktive Mobiltelefon optimiert die Auswahl einer Frequenz und der Zeitparameter in Zusammenhang mit einem fiktiven Kennzeichnungssignal;
• die fiktive Basisstation entsendet auf dieser ausgewählten Frequenz mit den ausgewählten Zeitparametern das fiktive Kennzeichnungssignal, das zeitlich das normalerweise vom Netz entsandte Signal überlagert und von den Mobiltelefonen der realen Basisstation als eine reale Entsendung interpretiert wird.

4. Verfahren nach Anspruch 3, **dadurch gekennzeichnet, dass** nach der Planungsaufstellung des Netzes das fiktive Mobiltelefon (MS_F) ein selektives Störsignal entsendet, das dazu geeignet ist, die Verwendung gewisser Frequenzen oder gewisser Zeitintervalle oder Slots für die vorhandenen mobilen Terminals zu untersagen und ihre Verbindung mit der fiktiven Basisstation zu fördern.

5. Verfahren nach Anspruch 4, **dadurch gekennzeichnet, dass** nach dem Verbinden des Mobiltelefons (MS_R) mit der virtuellen Basisstation (BTS_F) diese Letztgenannte mindestens die folgenden Schritte ausführt:
• Decodierung, Interpretation und Verzögerung auf transparente und synchrone Weise der Meldungen, die zwischen der realen Basisstation und dem realen Mobiltelefon entsandt werden,
und:
• Authentifizierung der mobilen Terminals,
• unter Verwendung des Rufkanals und der speziell vorgesehenen Kanäle Einsatz der entsprechenden Verfahren
- die das Mobiltelefon dazu veranlassen, seine Parameter IMSI, IMEI, TMSI, SRES nach geeigneten Modi und Wiederholungsraten zu liefern,
- die dann das fiktive Netz dazu veranlassen, durch eine erfindungsspezifische Bearbeitung den Schlüssel Ki des Mobiltelefons (MS_R) zu erhalten,
- die das fiktive Netz dazu veranlassen, nach Bearbeitung den Schlüssel Kc des Mobiltelefons (MS_R) für spätere Sitzungen zu erhalten,
- die das Mobiltelefon dazu veranlassen, in seinen Speicher oder den seiner SIM-Karte Parameter und Anwendungen einzutragen, die vom fiktiven Netz angegeben werden,
- die das Mobiltelefon dazu veranlassen, die Anzeige-, Zugriffs- und Verkehrssignale auf vom fiktiven Netz angegebenen Frequenzen zu entsenden.

6. Verfahren nach Anspruch 5, **dadurch gekennzeichnet, dass** das fiktive Netz das reale Mobiltelefon (MS_R) durch Erzwingen eines Zelltransferverfahrens oder Handovers oder einer Relokalisierung auf eine andere reale Zelle des Netzes als die reale Basisstation (BTS_R) oder durch absichtliche Herabsetzung der Kommunikation, die zu ihrer Unterbrechung führt, oder durch erzwungenes Abfangen des Protokolls abweist.

7. Verfahren nach einem der Ansprüche 1 bis 6, **dadurch gekennzeichnet, dass** ein öffentliches digitales Mobiltelefonnetz verwendet wird.

8. System zur Steuerung und Analyse der Funkkommunikationen, die zwischen mobilen Terminals und Basisstationen (BTS) ausgetauscht werden, umfassend ein fiktives Mobiltelefonnetz (RRTM_F), umfassend eine fiktive Basisstation (BTS_F) und ein fiktives mobiles Terminal (MS_F), wobei das fiktive Netz in das reale Netz (RRTM_R) eingesetzt ist, **dadurch gekennzeichnet, dass** das fiktive Netz dazu ausgelegt ist, die Decodierung und ein transparentes und synchrones Relais der zwischen dem realen Netz und dem realen Mobiltelefon ausgetauschten Meldungen, die Zugriffskontrolle der realen Mobiltelefone vom realen Netz oder vom fiktiven Netz zu gewährleisten.
